(19) Europäisches Patentamt
European Patent Office
Office européen des brevets

(11) Veröffentlichungsnummer: **0 304 589 B1**

(12) **EUROPÄISCHE PATENTSCHRIFT**

(45) Veröffentlichungstag der Patentschrift: **11.11.92**

(51) Int. Cl.$^5$: **C08F 236/04**, C08F 4/48

(21) Anmeldenummer: **88110837.7**

(22) Anmeldetag: **07.07.88**

# (54) Verfahren zur Herstellung von Polymerisaten auf Basis von konjugierten Dienen und ggf. monovinylaromatischen Verbindungen.

(30) Priorität: **28.07.87 DE 3724870**

(43) Veröffentlichungstag der Anmeldung: **01.03.89 Patentblatt 89/09**

(45) Bekanntmachung des Hinweises auf die Patenterteilung: **11.11.92 Patentblatt 92/46**

(84) Benannte Vertragsstaaten: **AT BE CH DE ES FR GB IT LI LU NL SE**

(56) Entgegenhaltungen:
**EP-A- 0 128 607**
**US-A- 3 855 189**

**DATABASE CHEMICAL ABSTRACTS, (GAST-GEBER: STN), 1982, REF. CA97(22): 183777d, Columbus, Ohio, US; & JP-A-57 85 809 (ASAHI CHEMICAL INDUSTRY CO., LTD) 25-05-1982**

**DATABASE CHEMICAL ABSTRACTS, (GAST-GERBER: STN), 1982, REF. CA97(26):217742f, Columbus, Ohio, US; & JP-A-57 117 508 (ASAHI CHEMICAL INDUSTRY CO., LTD) 22-07-1982**

**CHEMICAL ABSTRACTS SERVICE REGISTRY HANDBOOK, Seite 1945R**

(73) Patentinhaber: **HÜLS AKTIENGESELLSCHAFT - RSP Patente / PB 15 - Postfach 13 20 W-4370 Marl 1(DE)**

(72) Erfinder: **Hellermann, Walter, Dr.**
**Waldstrasse 16**
**W-4270 Dorsten 21(DE)**
Erfinder: **Herrmann, Christoph, Dr.**
**Siedlungstrasse 3**
**W-4370 Marl(DE)**
Erfinder: **Fuchs, Hans-Bernd, Dr.**
**Leverkusener Strasse 12**
**W-4370 Marl(DE)**
Erfinder: **Nordsiek, Karl-Heinz, Dr.**
**Neumarkstrasse 4**
**W-4370 Marl(DE)**
Erfinder: **Wolpers, Jürgen, Dr.**
**Hetfeld 15 c**
**W-4358 Haltern(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft ein Verfahren zur Herstellung von gegebenenfalls gekuppelten, blockfreien Polymerisaten auf Basis von konjugierten Dienen und gegebenenfalls monovinylaromatischen Verbindungen, die Verfahrensprodukte sowie ihre Verwendung zur Herstellung von Reifen und von Dämpfungsmaterialien. Die Verfahrensprodukte zeichnen sich durch einen hohen Anteil an 1,2-Struktureinheiten des Butadiens und 1,2- und 3,4-Struktureinheiten des Isoprens aus.

Aus dem Stand der Technik sind zahlreiche Verfahren zur Herstellung derartiger Polymerisate bekannt. Technische Bedeutung haben vor allem die Verfahren erlangt, bei denen die Monomeren in einem inerten organischen Lösemittel wie z. B. Hexan, Cyclohexan oder Toluol anionisch polymerisiert werden. Als Initiator, der aber üblicherweise als Katalysator bezeichnet wird, verwendet man Alkali-organische Verbindungen, insbesondere Alkyl-Lithiumverbindungen.

Kautschuke mit sternförmiger Struktur weisen gegenüber ihren Homologen mit linearer Struktur Vorteile auf (vgl. EP-OS 0 090 365). Man erhält sie, indem man die Dienmomonere zu sogenannten "lebenden Polymeren" und diese anschließend mit Kupplungsmitteln wie z. B. Polyhalogenverbindungen oder Divinylaromaten umsetzt.

Es ist bekannt, daß die Anwesenheit bestimmter polarer Verbindungen, die auch als Cokatalysatoren bezeichnet werden, Einfluß auf die Mikrostruktur und damit auf den Verlauf der Polymerisation im Hinblick auf eine bevorzugte Bildung von 1,2- und 3,4-Struktureinheiten hat (vgl. K. H. Nordsiek, K. M. Kiepert, Kautschuk und Gummi, Kunststoffe 35, 371 (1982) sowie K. H. Nordsiek, Kautschuk und Gummi, Kunststoffe 39, 599 (1986).

In der Vergangenheit sind eine Reihe von Verfahren zur Herstellung von Polymerisaten auf Basis von konjugierten Dienen entwickelt worden, bei denen unterschiedliche Cokatalysatoren eingesetzt wurden. Es hat sich gezeigt, daß der Cokatalysator in vielfältiger Weise die Polymerisation beeinflußt. Im einzelnen sind folgende Anforderungen an den Cokatalysator zu stellen:

1. Er soll zu keiner Geruchsbelästigung führen. Dies bedeutet, daß beispielsweise tertiäre Amine, die ebenfalls als Cokatalysatoren vorgeschlagen wurden, aus diesem Grunde ungeeignet sind. Darüber hinaus beeinflussen Amine in ungünstiger Weise die Stahlhaftung im Reifen.
2. Er soll den Verlauf der Polymerisation so steuern, daß das erhaltene Polymere mehr als 70 % 1,2- und 3,4-Isoprenstruktureinheiten und mehr als 60 % Butadienstruktureinheiten aufweist.
3. Grundsätzlich ist die Wirkung eines Cokatalysators von dem Verhältnis der Molmengen von Cokatalysator und Katalysator, d. h. der Li-organischen Verbindung, abhängig. Die gemäß 2) zu erzielende Wirkung sollte bereits mit einem Molverhältnis Cokatalysator/Katalysator von 10 : 1 erreichbar sein.
4. Der Zusatz eines Cokatalysators beeinflußt die Ausbeute an Polymerisat. Cokatalysatoren, mit denen sich Ausbeuten von 90 % nicht erzielen lassen, sind ungeeignet.
5. Der Cokatalysator soll gegenüber den bei der Polymerisation als Anion vorliegenden "lebenden Polymeren" bei Temperaturen bis zu 125 °C weitgehend inert sein. Dieser Forderung kommt insbesondere dann Bedeutung zu, wenn man die lebenden Polymere nach Abschluß der Polymerisation mit Kupplungsmitteln zu sternförmigen Kautschuken oder mit geeigneten elektrophilen Verbindungen umsetzt.
6. Der Cokatalysator soll vom verwendeten Lösemittel leicht destillativ abtrennbar sein.
7. Der Cokatalysator sollte leicht synthetisch zugänglich sein.

Im Hinblick auf diese Anforderungen kommen als Cokatalysatoren grundsätzlich nur die ethergruppenhaltigen Verbindungen in Frage.

Aliphatische Dialkylether wie z. B. Diethylether und cyclische Ether wie Tetrahydrofuran (THF) entfalten keine ausreichende Mikrostrukturregelung (vgl. T. A. Antkowiak et al, J. of Polymer Science Part A-1, Vol. 10, S. 1319 bis 1334 (1972).

So erzielt man beispielsweise bei der anionischen Polymerisation von Butadien mit Butyllithium in Gegenwart eines sogar 85fachen Überschusses an THF ein Polybutadien, das lediglich 49 % 1,2-Struktureinheiten enthält. Der Einsatz einer so großen Menge Cokatalysator wird in der Praxis als großer Nachteil empfunden.

Der gleichen Literaturstelle ist zu entnehmen, daß mit Ethylenglykoldimethylether als Cokatalysator bei der Polymerisation von Butadien ein Polymeres mit einem Anteil von 63,7 % 1,2-Struktureinheiten erhältlich ist. Dieser Glykolether weist jedoch zwei erhebliche Nachteile auf. Erstens ist er von Hexan nicht ohne weiteres abtrennbar. Zweitens beträgt die Kupplungsausbeute dieses Ethylenglykoldialkylethers 0 %. Man mußte daher davon ausgehen, daß auch die beiden übrigen im Stand der Technik genannten Vertreter dieser Verbindungsklasse, nämlich Ethylenglykoldiethylether und Ethylenglykoldibutylether, den hier genannten Anforderungen nicht entsprechen würden.

Neben den Ethylenglykoldialkylethern sind in der Vergangenheit auch Diethylenglykoldialkylether als Cokatalysatoren vorgeschlagen worden (siehe z. B. EP-OS 0 090 365).

Allerdings sind die Ergebnisse auch hier unbefriedigend. Bei den aus der JP-OS 82/87 406 bekannten Butadien-Isopren-Copolymerisaten, die durch Copolymerisation in Gegenwart von Butyllithium und Diethylglykoldimethylether erhalten werden, ist der Umsatz unbefriedigend. Setzt man Diethylenglykoldimethylether bei der Polymerisation von Butadien und Styrol ein, so erhält man eine Kupplungsausbeute von 0 % (vgl. Beispiel 8 der US-PS 4 530 985). Eigene Versuche mit diesem Glykolether bei der Polymerisation von Isopren ergaben eine Polymerausbeute von lediglich 78 %.

Eigene Versuche mit Diethylenglykoldiethylether (oder Ethylenglykoldiethylether) bei der Polymerisation von Isopren ergaben zwar eine verbesserte Polymerausbeute; aber es war nicht möglich, sternförmige Kautschuke aufzubauen. Dies spricht dafür, daß bei der Zugabe des Kupplungsmittels überhaupt keine lebenden Polymeren mehr vorhanden waren. Die Erfinder der US-PS 4 530 985 kommen daher folgerichtig zu dem Schluß, daß "viele der Modifiziermittel (gemeint sind die Cokatalysatoren), die in der Vergangenheit allgemein vorgeschlagen wurden, wie z. B. Diethylenglykoldimethylether dazu neigen, die Polymerisationsreaktion vorzeitig zu beenden und/oder die Kupplungsreaktion zu stören" (vgl. Spalte 1, Zeilen 31 bis 35). Auch J. Kminek et al. kommen zu dem Schluß, daß die "lebenden Polymeren" in Anwesenheit von Ethylenglykoldimethylether nur kurze Zeit stabil sind (vgl. Makromol. Chemie 183, 1755 (1982).

Gegenstand der EP-OS 0 128 607 ist ein Verfahren zur Herstellung von Copolymeren aus einer aromatischen Vinylverbindung und einem konjugierten Dien. Dieses Copolymer weist einen Vinylgehalt von mindestens 30 Gewichtsprozent auf, ist durch einen besonders hohen Anteil an aromatischen Vinylverbindungen im Anfangs- und Endteil der Polymerkette charakterisiert und wird durch Polymerisation in Anwesenheit eines Mikrostrukturreglers der allgemeinen Formel

$$R^1 - O - CH_2 - CH_2 - O - R^2$$

hergestellt, wobei $R^1$ und $R^2$ gleiche oder unterschiedliche Alkylreste mit 2 bis 18, insbesondere 2 bis 6, C-Atomen sind.

In der US-PS 4 530 985 wird vorgeschlagen, an Stelle der bekannten Glykolether Verbindungen der allgemeinen Formel

$$R_1 - O - CH_2 - CH(R_2) - O - CR_3R_4 - O - R_5$$

einzusetzen.

Die Mikrostrukturregelung und die Kupplungsausbeute dieser Cokatalysatoren sind allerdings ebenfalls unbefriedigend. Diese Verbindungen sind zudem nur schwer zugänglich.

Aus der nicht vorveröffentlichten deutschen Patentanmeldung P 37 07 434.2 (EP-A-248175) ist ein anionisches Polymerisationsverfahren bekannt, bei dem als Katalysator eine Li-organische Verbindung und als Cokatalysator ein Ethylenglykoldialkylether der Formel $R_1$-O-$CH_2$-$CH_2$-O-$R_2$ eingesetzt wird, wobei $R_1$ und $R_2$ C(1-4)-Alkylreste sein können und die Reste $R_1$ und $R_2$ eine unterschiedliche Zahl von C-Atomen aufweisen. Dieses Verfahren ist jedoch auf die Polymerisation von Isopren beschränkt.

Die JP-PS 82/85 809 offenbart ein Verfahren zur Herstellung eines Dienpolymeren in Gegenwart eines Ethylenglykoldialkylethers und eines Allens mit niedrigem kalten Fluß. Unter anderem wird bei diesem Verfahren auch Ethylenglykoldimethylether eingesetzt, der, wie beschrieben, nicht den genannten Anforderungen entspricht. Mit den anderen verwendeten Ethern werden Polymere hergestellt, die 1,2-Butadien-Struktureinheiten (bezogen auf Butadien) von nur wenig über 40% besitzen.

Aufgrund des aufgeführten Standes der Technik gab es kein Verfahren zur Herstellung von Polymerisaten, bei den mindestens 2 Verbindungen aus der Gruppe Butadien, Isopren und Styrol eingesetzt werden und bei den die hier genannten Anforderungen der Praxis an den Cokatalysator erfüllt werden.

Ziel der Erfindung war es, ein solches Verfahren zu entwickeln. Ein weiteres Ziel der Erfindung bestand darin, blockfreie Polymerisate zu entwickeln, die zur Herstellung von Reifen und Dämpfungsmaterialien verwendet werden können. Schließlich sollten die nach diesem Verfahren erhältlichen Kautschuke eine Glasübergangstemperatur im Bereich von -35 bis +5 °C, insbesondere -30 bis 0 °C, aufweisen.

Es wurde jetzt überraschend ein solches Verfahren gefunden. Dieses besteht darin, daß man als Cokatalysator einen Ethylenglykoldialkylether der Formel

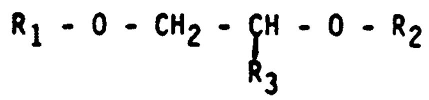

einsetzt, wobei $R_3$ für Wasserstoff oder eine Methyl- oder Ethylgruppe steht und $R_1$ und $R_2$ Alkylreste mit einer unterschiedlichen Zahl von C-Atomen aus der Gruppe Methyl-, Ethyl-, n- und iso-Propyl sowie n-, iso-, sek.- und tert.- Butyl sind und die Summe der C-Atome in den beiden Alkylresten 5 bis 7 beträgt.

Als Reaktionsmedium wird ein inertes organisches Lösemittel verwendet. Geeignet sind insbesondere Kohlenwasserstoffe mit 5 bis 12 C-Atomen wie Pentan, Hexan, Heptan und Oktan sowie deren cyclische Analogen. Geeignet sind auch aromatische Lösemittel wie z. B. Benzol, Toluol u. a. Selbstverständlich können auch Gemische der vorstehend beschriebenen Verbindungen eingesetzt werden.

Als Katalysator werden Alkyllithiumverbindungen eingesetzt, die durch Umsetzung von Lithium mit den entsprechenden Alkylhalogeniden leicht zugänglich sind. Die Alklyreste weisen 1 bis 10 C-Atome auf. Einzelne Wasserstoffatome können durch Phenylreste substituiert sein. Folgende Alkyllithiumverbindungen sind besonders geeignet: Methyllithium, Ethyllithium, Pentyllithium; bevorzugt wird Butyllithium.

Im Prinzip lassen sich auch bifunktionelle organische Lithiumverbindungen einsetzen. Diese sind jedoch weniger leicht zugänglich und insbesondere dann weniger günstig als ihre monofunktionellen Analogen, wenn man sternförmiges Polyisopren herstellen möchte.

Die Menge des eingesetzten Katalysators richtet sich nach dem Molekulargewicht, das eingestellt werden soll. Dieses liegt üblicherweise im Bereich von 50 000 bis 1 500 000. Zwischen dem Molekulargewicht [M], der Monomermenge in g [I] und der Molmenge des Katalysators [K] besteht folgender empirisch gefundener Zusammenhang

$$[I] / [K] = [M],$$

der zur Ermittlung der erforderlichen Katalysatormenge üblicherweise herangezogen wird. Bei einem gewünschten Molekulargewicht im Bereich von 50 000 bis 400 000 werden, bezogen auf 100 Teile Monomere, vorzugsweise 0,128 bis 0,016 Teile n-Butyllithium, benötigt. Um Molekulargewichte unter 50 000 einzustellen, sind höhere Katalysatormengen erforderlich. Der Fachmann ist aufgrund weniger orientierender Versuche in der Lage, die Katalysatormengen anzugeben. Vorzugsweise wird der Cokatalysator zu Beginn der Reaktion zugesetzt. Er kann jedoch auch noch, wenn dies aus irgendwelchen Gründen zweckmäßig sein sollte, während der Polymerisation zugesetzt werden.

Erfindungsgemäß werden als Cokatalysatoren Ethylenglykolether der Formel

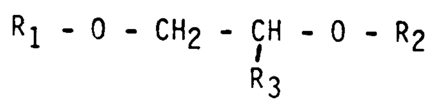

eingesetzt. $R_3$ ist ein Methyl- oder Ethylrest oder vorzugsweise Wasserstoff. $R_1$ und $R_2$ sind C (1 - 4)-Alkylreste wie Methyl, Ethyl, n-und iso-Propyl sowie n-, iso, -sek.- und tert. Butyl. Entscheidend ist, daß sich die Alkylreste $R_1$ und $R_2$ in der Zahl der C-Atome unterscheiden und die Summe der C-Atome der beiden Reste 5 bis 7, vorzugsweise 6 beträgt. Besonders geeignete Ethylenglykolether sind die Verbindungen mit $R_1$ = Methyl bzw. Ethyl und $R_2$ = tert. Butyl. Die erfindungsgemäßen Glykolether sind bekannt. Sie sind beispielsweise nach dem Prinzip der Williamson-Synthese aus einem Natriumalkoholat und einem Alkylalogenid zugänglich. Die Ether der Formel

$$R_1 - O - CH_2 - CH_2 - O - C(CH_3)_3$$

können in einfacher Weise durch Umsetzung des entsprechenden Alkohols

$$R_1 - O - CH_2 - CH_2 - O H$$

mit Isobuten in Gegenwart eines sauren Ionenaustauschers hergestellt werden.

Der Cokatalysator wird in einem Verhältnis von 2 : 1 bis 30 : 1, insbesondere 2 : 1 bis 15 : 1, bezogen auf die Molzahl des Katalysators eingesetzt. Bei höheren Temperaturen werden im allgemeinen größere Mengen an Cokatalysator benötigt, um die gewünschte Mikrostrukturregelung zu erzielen.

Zur Verbesserung der Randomizerwirkung kann eine oberflächenaktive Verbindung mit der Gruppierung $-SO_3M$ oder $-OSO_3M$ mit M = Na, K, Rb, Cs aus der Gruppe der Alkylarylsulfonate, der Sulfonate mit einer Amid-oder Esterbildung und der Schwefelsäurehalbester mit höheren Alkoholen in einer Menge von bis zu 1 Mol pro Mol Lithium des Initiators zugesetzt werden.

Eine besonders bevorzugte Variante des erfindungsgemäßen Verfahrens besteht darin, die nach weitgehend vollständiger Umsetzung der Monomeren erhaltenen Polymerisationseinheiten mit einem Kupplungsmittel zu sternförmigen Polymeren zu kuppeln. Eine andere Möglichkeit besteht darin, die erhaltenen Einheiten mit reaktionsfähigen Elektrophilen wie z. B. Ketonen, Epoxiden, Estern und Isocyanaten umzusetzen. In beiden Fällen erhält man ein funktionalisiertes Polymerisat.

Zu diesem Zweck geeignete Kupplungsmittel sind insbesondere Tetra halogenide der Elemente Silizium, Germanium, Zinn und Blei sowie Aromaten, die mindestens 2 Vinylgruppen tragen, wie z. B. 1,3,5-Trivinylbenzol und 1,3- und 1,4-Divinylbenzol.

Die Polymerisation wird im Temperaturbereich von 0 bis 130 °C durchgeführt. Bevorzugt arbeitet man bei 40 bis 100 °C. Die Kupplung wird bei 0 bis 150 °C, vorzugsweise 40 bis 100 °C, durchgeführt.

Die erhaltenen gekuppelten Polymerisate weisen ein Molekulargewicht von 40 000 bis 1 500 000, vorzugsweise 200 000 bis 1 000 000, auf.

Das Verfahren kann sowohl diskontinuierlich wie kontinuierlich betrieben werden.

Die erhaltenen amorphen Polymerisate werden, wenn sie zu Vulkanisaten verarbeitet werden sollen, mit aktiven,verstärkenden Füllstoffen, einem Vulkanisationsmittel und üblichen Zusatzstoffen gemischt. Im allgemeinen ist es erforderlich, diese Vermischung unter Einwirkung von Scherkräften durchzuführen.

Massen, welche zur Herstellung von Reifenlaufflächen bestimmt sind, werden im allgemeinen zu Rohlaufstreifen geformt. Bei der Homogenisierung und Formgebung, die beispielsweise in einem Extruder erfolgen kann, werden die Bedingungen von Temperatur und Zeit so gewählt, daß keine Vulkanisation eintritt.

Die Kautschukkomponente besteht in diesem Falle beispielsweise zu 10 bis 40 Massen-% aus einem erfindungsgemäßen Reaktionsprodukt und zu 90 bis 60 Massen-% aus einem bekannten, amorphen, hochungesättigten Allzweckkautschuk wie z. B. Styrol-Butadien-Kautschuk, 1,4-cis-Polybutadien, 1,4-cis-Polyisopren und Naturkautschuk.

Aktive, verstärkende Füllstoffe sind beispielsweise Reifenlaufflächenruße unterschiedlicher Aktivität, insbesondere solche aus der N-300-Reihe (ASTM), mit Silan Haftvermittlern behandelte, hochdisperse Kieselsäuren und ihre Gemische.

Übliche Vulkanisationsmittel enthalten z. B. Schwefel in Kombination mit Beschleunigern. Die Menge des Vulkanisationsmittels richtet sich nach den übrigen Komponenten in der vulkanisierbaren Masse und kann durch einfache, orientierende Versuche ermittelt werden.

Als Zusatzstoff können die in der Kautschuktechnik üblichen Weichmacheröle, bevorzugt aromatische, aliphatische und naphthenische Kohlenwasserstoffe sowie übliche Hilfsmittel, wie beispielsweise Zinkoxid, Stearinsäue, Harzsäuren, Alterungsschutzmittel und Ozonschutzwachse, in üblichen Mengen zugesetzt werden.

Die erfindungsgemäßen Polymerisate eignen sich insbesondere zur Herstellung der Laufflächen von Pkw- und Lkw-Reifen, und zwar sowohl zur Herstellung von Neureifen als auch zur Runderneuerung von Altreifen.

Die erhaltenen Reifenlaufflächen zeichnen sich durch eine ausgezeichnete Haftung aus. Hervorzuheben ist auch die außergewöhnlich hohe Reversionsstabilität beim Vulkanisationsprozeß und die außergewöhnlich hohe Netzwerkstabilität der Reifenlaufflächen bei dynamischer Beanspruchung.

Die erfindungsgemäßen Polymerisate können auch zur Herstellung von Dämpfungselementen verwandt werden (siehe z. B. DE-OS 24 59 357).

## Experimenteller Teil

Als Lösemittel wurde ein Kohlenwasserstoffgemisch eingesetzt, das zu etwa 50 % aus n-Hexan bestand und als $C_6$-Schnitt bezeichnet wird. Weitere Bestandteile dieses Gemisches waren insbesondere Pentan, Heptan und Oktan sowie deren Isomere. Das Lösemittel wurde über einem Molekularsieb der Porenweite 0,4 nm getrocknet, so daß der Wasseranteil unter 10 ppm gesenkt wurde, und anschließend mit $N_2$ gestrippt.

Die organische Lithiumverbindung war n-Butyllithium (LiBu), die in Form einer 15 gewichtsprozentigen Lösung in Hexan zur Anwendung kam.

Isopren wurde vor seinem Einsatz destillativ vom Stabilisator abgetrennt.

Die Glykolether wurden über Aluminiumoxid getrocknet und anschließend mit n-Butyllithium in Gegenwart von o-Phenanthrolin austitriert.

Das Divinylbenzol (DVB) wurde in Form einer über $Al_2O_3$ getrockneten Lösung eingesetzt, die 44 % m- und 20 % p-Divinylbenzol enthielt.

Als Kupplungsausbeute wird der Prozentanteil an Kautschuk angesehen, der nach der Umsetzung mit einem Kupplungsmittel eine sternförmige Struktur aufweist und sich gegenüber dem ungekuppelten Kautschuk durch ein erheblich höheres Molekulargewicht auszeichnet. Die Bestimmung erfolgt mit der GPC-Analyse, wobei Tetrahydrofuran als Lösemittel und Polystyrol als Säulenmaterial eingesetzt wird. Die Polymerisate werden mit einem Lichtstreuungsdetektor charakterisiert. Zu diesem Zweck werden dem Reaktor vor Zugabe des Kupplungsmittels und zu Ende der Reaktion Proben entnommen.

Die Mikrostruktur wird mit Hilfe des IR-Spektrums bestimmt.

Die Glasübergangstemperatur Tg wurde mit einem Schwingungselastometer gemessen (1 Hz bei 1 °C/min. Aufheizzeit).

Beispiel 1

In einem mit trockenem Stickstoff gespülten V2A-Autoklaven wurden 400 Teile Hexan, ein Monomeren-Gemisch aus 40 Teilen 1,3-Butadien, 40 Teilen Isopren, 20 Teilen Styrol, 0,02 Teilen DVB und 1,0 Teilen Ethylglykoltertiärbutylether vorgelegt und nach Trocknung über Molekularsieb (0,4 nm) unter thermoelektrischer Kontrolle mit Butyllithium titriert. Die Polymerisation wurde bei 40 °C durch Zugabe von 0,05 Teilen n-Butyllithium gestartet. Die Temperatur erreichte bei leichter Kühlung nach 8 Minuten 108 °C. Bei dieser Temperatur konnte der Ansatz 30 Minuten lang nachreagieren. Nach Abkühlung auf 50 °C wurde die Polymerisation durch Zugabe einer Lösung von 0,5 Teilen 2,2'-Methylen-bis(4-methyl-6-tertiär-butylphenol) in 2 Teilen feuchtem Toluol gestoppt. Das Lösemittel wurde mit Wasserdampf abdestilliert und das Polymerisat 24 Stunden bei 70 °C im Umlufttrockenschrank getrocknet.

Beispiele 2 bis 5

Die Durchführung entspricht Beispiel 1 (siehe Tabelle 1).

Beispiel 6

In einem mit trockenem Stickstoff gespülten V2A-Autoklaven werden 550 Teile Hexan, ein Monomergemisch aus 75 Teilen 1,3-Butadien und 25 Teile Styrol und 0,7 Teile Ethylglykoltertiärbutylether vorgelegt und nach Trocknung über Molekularsieb (0,4 nm) unter thermoelektrischer Kontrolle mit Butyllithium titriert. Die Polymerisation wurde bei 35 °C durch Zugabe von 0,080 Teilen n-Buli gestartet. Die Temperatur erreichte bei leichter Kühlung nach 10 Minuten 113 °C. Bei dieser Temperatur konnte der Ansatz 30 Minuten nachreagieren. Danach wurden bei dieser Temperatur 0,81 Teile Divinylbenzol zugegeben. Nach 20 Minuten und nach Abkühlen auf 50 °C wurde die Polymerisation durch Zugabe einer Lösung von 0,5 Teilen 2,2'-Methylen-bis(4-methyl-6-tertiär-butylphenol) in 2 Teilen feuchtem Toluol gestoppt. Das Lösemittel wurde mit Wasserdampf abdestilliert und das Polymerisat 24 Stunden bei 70 °C im Umlufttrockenschrank getrocknet.

Beispiele 7 bis 9

Die Durchführung entspricht Beispiel 6 (siehe Tabelle 2).

Tabelle 1:

| Beispiele | 1 ** | 2 | 3 | 4 ** | 5 ** |
|---|---|---|---|---|---|
| Vorlage: Hexan (Teile) | 400 | 400 | 460 | 300 | 560 |
| Butadien | 40 | 77 | - | 30 | 40 |
| Isopren | 40 | - | 75 | 70 | 40 |
| Styrol | 20 | 23 | 25 | - | 20 |
| BEE 1) | 1,0 | - | 0,4 | 1,0 | 0,75 |
| BPE 2) | - | 0,45 | - | - | - |
| DVB | 0,02 | 0,015 | 0,02 | 0,02 | 0,02 |
| Start: LiBu | 0,050 | 0,048 | 0,055 | 0,047 | 0,042 |
| Starttemp. (°C) | 40 | 27 | 50 | 39 | 40 |
| Endtemp. (°C) | 108 | 122 | 54 | 78 | 60 |
| Laufzeit (Min.) | 38 | 50 | 150 | 65 | 60 |
| Mikrostruktur (%): | | | | | |
| trans-1,4-Butadien | 10 | 15 | - | 5 | 6 |
| trans-1,2-Butadien | 22 | 52 | - | 33 | 30 |
| cis-1,4-Butadien | 8 | 9 | - | 4 | 7 |
| 3,4-Isopren | 28 | - | 44 | 49 | 33 |
| 1,4-Isopren | 8 | - | 21 | 9 | 2 |
| 1,2-Isopren | *) | - | 8 | *) | *) |
| Styrol | 24 | 24 | 27 | - | 22 |
| Block-PS (%) 3) | < 0,5 | 2,5 | 0,9 | - | < 0,5 |
| Tg (°C) | -17 | -24 | -12 | -11 | ±0 |
| $M_L$ (1 + 4) (100 °C) 5) | 53 | 53 | 45 | 54 | 52 |
| DH 4) | 625 | 750 | 525 | 675 | 575 |
| DE 4) | 26 | 22 | 20 | 23 | 21 |

*) im 1,2-Butadien-Wert enthalten

1) Ethylglykol-tert. butylether

2) Propylglykol-tert. butylether

3) Bestimmung des Blockpolystyrolanteils nach Houben-Weyl, Methoden der org. Chemie Bd. 14/1 (1961), Seite 698

4) Defo-Härte und -Elastizität nach DIN 53 514

5) Mooney-Viskosität gemäß DIN 53 523

6) Methylglykol-tert. butylether

**) Vergleichsversuch.

Tabelle 2

| Beispiele | 6 | 7 | 8 ** | 9 |
|---|---|---|---|---|
| Vorlage: Hexan (Teile) | 550 | 550 | 550 | 550 |
| Butadien | 75 | 75 | 40 | 75 |
| Isopren | - | - | 40 | - |
| Styrol | 25 | 25 | 20 | 25 |
| BEE[1)] | 0,7 | 0,7 | 0,8 | - |
| MEB[6)] | - | - | - | 0,8 |
| Start: LiBu | 0,080 | 0,067 | 0,074 | 0,082 |
| Starttemp. (°C) | 35 | 30 | 35 | 35 |
| Endtemp. (°C) | 113 | 115 | 60 | 110 |
| Laufzeit (Min.) | 30 | 55 | 80 | 35 |
| Zugabe von DVB (Teile) | 0,81 | - | 0,75 | 0,81 |
| $SiCl_4$ | - | 0,045 | - | - |
| Reaktionszeit (Min.) | 20 | 20 | 20 | 20 |
| Mikrostruktur (%): | | | | |
| trans-1,4-Butadien | 12 | 13 | 5 | 8 |
| 1,2-Butadien | 54 | 56 | 32 | 58 |
| cis-1,4-Butadien | 8 | 7 | 7 | 8 |
| 3,4-Isopren | - | - | 33 | - |
| 1,4-Isopren | - | - | 2 | - |
| 1,2-Isopren | - | - | *) | - |
| Styrol | 26 | 25 | 21 | 26 |
| Block-PS (%) [3)] | 2,8 | 2,5 | < 0,5 | 2,0 |
| Tg (°C) | -22 | -20 | ± 1 | -20 |
| $M_L$ (1 + 4) (100 °C)[5)] | 48 | 47 | 50 | 50 |
| Zähligkeit | 6,1 | 3,7 | 4,8 | 5,5 |
| Kupplungsausbeute (%) | 80 | 75 | 80 | 75 |

Bezüglich der Anmerkungen wird auf die Erläuterungen zu Tabelle 1 verwiesen.

## Patentansprüche

1. Verfahren zur Herstellung von gegebenenfalls gekuppelten, blockfreien Polymerisaten auf Basis von konjugierten Dienen in Abwesenheit von Allenen und gegebenenfalls monovinylaromatischen Verbindungen durch anionische Polymerisation von mindestens 2 Verbindungen aus der Gruppe Butadien, Isopren und Styrol in einem inerten organischen Lösemittel in Gegenwart einer Li-organischen Verbindung als Katalysator und einem Ether als Cokatalysator,
dadurch gekennzeichnet,
daß man als Cokatalysator einen Ethylenglykoldialkylether der Formel

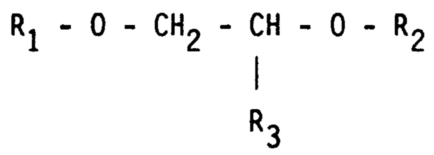

einsetzt, wobei $R_3$ für Wasserstoff oder eine Methyl- oder Ethylgruppe steht und $R_1$ und $R_2$ Alkylreste mit einer unterschiedlichen Zahl von C-Atomen aus der Gruppe Methyl-, Ethyl-, n- und iso-Propyl sowie n-, iso-, sek.- und tert.-Butyl sind und die Summe der C-Atome in den beiden Alkylresten 5 bis 7 beträgt, wobei das erhaltene Polymere mehr als 70 % 1,2- und 3,4-Isopreneinheiten und mehr als 60 % Butadieneinheiten aufweist.

**2.** Verfahren nach Anspruch 1,
dadurch gekennzeichnet,
daß die Summe der C-Atome in den beiden Alkylresten $R_1$ und $R_2$ 6 beträgt.

**3.** Verfahren nach Anspruch 1 oder 2,
dadurch gekennzeichnet,
daß $R_3$ Wasserstoff bedeutet.

**4.** Verfahren nach den Ansprüchen 1 und 3,
dadurch gekennzeichnet,
daß $R_1$ ein Methylrest ist.

**5.** Verfahren nach Anspruch 4,
dadurch gekennzeichnet,
daß $R_2$ ein n-, i- oder tert. Butylrest ist.

**6.** Verfahren gemäß den Ansprüchen 1 bis 5,
dadurch gekennzeichnet,
daß man folgende Monomergemischen einsetzt, wobei sich die %-Angaben jeweils auf das Gewicht der Mischung beziehen
a) Gemisch aus Isopren und bis zu 75 % Butadien,
b) Gemisch aus 15 bis 75 % Butadien,
20 bis 85 % Isopren und
bis 35 % Styrol.

**7.** Verfahren zur Herstellung von gekuppelten Polymerisaten gemäß Anspruch 1,
dadurch gekennzeichnet,
daß man dem Polymerisationsansatz zu Ende der Reaktion ein Kupplungsmittel zusetzt.

**8.** Verfahren gemäß Anspruch 7,
dadurch gekennzeichnet,
daß man als Kupplungsmittel ein Di- oder Trivinylbenzol einsetzt.

**9.** Polymerisate, hergestellt nach den Verfahren der Ansprüche 1 bis 8.

**10.** Verwendung der nach den Ansprüchen 1 bis 8 erhaltenen Polymerisate zur Herstellung von Reifen und Dämpfungsmaterialien.

**Claims**

1. A process for the preparation of possibly coupled, block-free polymers based on conjugated dienes in the absence of allenes and possibly monovinylaromatic compounds by anionic polymerisation of at least two compounds from the group comprising butadiene, isoprene and styrene in an inert organic solvent in the presence of an organolithium compound as catalyst and an ether as co-catalyst, characterised in that as co-catalyst an ethylene glycol dialkyl ether of the formula

$$R_1 - O - CH_2 - \underset{\displaystyle R_3}{\underset{|}{CH}} - O - R_2$$

is employed in which $R_3$ represents hydrogen or a methyl or ethyl group and $R_1$ and $R_2$ are alkyl radicals having a different number of C atoms from the group comprising methyl, ethyl, n- and iso-propyl and n-, iso-, sec- and tert-butyl and the sum of the C atoms in the two alkyl radicals is 5 to 7, the polymer obtained containing more than 70 % of 1,2- and 3,4-isoprene units and more than 60 % of butadiene units.

2. A process according to claim 1,
characterised in that the sum of the C atoms in the two alkyl radicals $R_1$ and $R_2$ is 6.

3. A process according to claim 1 or 2,
characterised in that $R_3$ is hydrogen.

4. A process according to either of claims 1 and 3,
characterised in that $R_1$ is a methyl radical.

5. A process according to claim 4,
characterised in that $R_2$ is an n-, i- or tert-butyl radical.

6. A process according to any of claims 1 to 5,
characterised in that the following monomer mixtures are employed in which the percentage data in each case relate to the weight of the mixture
   a) a mixture of isoprene and up to 75 96 of butadiene,
   b) a mixture of 15 to 75 96 of butadiene,
   20 to 85 96 of isoprene and
   up to 35 % of styrene.

7. A process for the preparation of coupled polymers according to claim 1,
characterised in that a coupling agent is added to the polymerisation mixture at the end of the reaction.

8. A process according to claim 7,
characterised in that a di- or trivinylbenzene is employed as coupling agent.

9. A polymer, prepared by the processes of claims 1 to 8.

10. The use of the polymers obtained according to claims 1 to 8 for the production of tyres and damping materials.

**Revendications**

1. Procédé de préparation de produits de polymérisation exempts de blocs, éventuellement copulés, à base de diènes conjugués en l'absence d'allènes et le cas échéant de composés monovinyl-aromatiques par polymérisation anionique d'au moins deux composés du groupe du butadiène, de l'isoprène et du styrène, dans un solvant organique inerte en présence d'un composé organique du

lithium en tant que catalyseur et d'un éther en tant que co-catalyseur,
caractérisé par le fait que l'on utilise comme co-catalyseur un éther dialkylique de l'éthylène-glycol de formule :

$$R_1 - O - CH_2 - \underset{\displaystyle R_3}{\underset{|}{CH}} - O - R_2$$

$R_3$ représentant de l'hydrogène ou un groupe méthyle ou éthyle et $R_1$ et $R_2$ représentant des radicaux alkyliques comportant un nombre différent d'atomes de carbone, du groupe méthyle, éthyle, n-propyle ou isopropyle ainsi que n-butyle, isobutyle, butyle secondaire et butyle tertiaire et la somme des atomes de carbone dans les deux radicaux alkyle est de 5 à 7, le polymère obtenu présentant plus de 70 % d'unités 1,2-isoprène et 3,4-isoprène et plus de 60 % d'unités butadiène.

**2.** Procédé selon la revendication 1,
caractérisé par le fait que la somme des atomes de carbone dans les deux radicaux alkyle $R_1$ et $R_2$ est égale à 6.

**3.** Procédé selon la revendication 1 ou 2,
caractérisé par le fait que $R_3$ représente de l'hydrogène.

**4.** Procédé selon les revendications 1 et 3,
caractérisé par le fait que $R_1$ est un radical méthyle.

**5.** Procédé selon la revendication 4,
caractérisé par le fait que $R_2$ est un radical n-butyle, iso-butyle ou tertio-butyle.

**6.** Procédé selon les revendications 1 à 5,
caractérisé par le fait qu'on utilise les mélanges monomères suivants, les indications de pourcentage se rapportant chaque fois au poids du mélange :
a) mélange d'isoprène et d'une quantité atteignant jusqu'à 75 % de butadiène,
b) mélange constitué par 15 à 75 % de butadiène,
20 à 85 % d'isoprène,
et jusqu'à 35 % de styrène.

**7.** Procédé de préparation de produits de polymérisation copulés selon la revendication 1,
caractérisé par le fait qu'à la fin de la réaction, on ajoute un agent de copulation à la charge de polymérisation.

**8.** Procédé selon la revendication 7,
caractérisé par le fait que l'on utilise, comme agent de copulation, un divinyl-benzène ou un trivinyl-benzène.

**9.** A titre de produits industriels nouveaux, les produits de polymérisation préparés suivant les procédés des revendications 1 à 8.

**10.** L'utilisation, pour la fabrication de pneumatiques et de matériaux d'amortissement, des produits de polymérisation obtenus selon les revendications 1 à 8.